# EUROPEAN PATENT APPLICATION

(11) **EP 4 509 702 A1**
(43) Date of publication of application: **19.02.2025**
(21) Application number: 24193692.1
(22) Date of filing: 08.08.2024
(51) Int. Cl.: F02C 3/10, B64C 11/30, B64D 27/33, B64D 31/18, F01D 5/04, F02K 5/00

(54) **HYBRID-ELECTRIC PROPULSION SYSTEM FOR AERONAUTICAL APPLICATIONS**

(30) Priority: 18.08.2023 IT 202300017364
(71) Applicant: Mariotti, Gabriele, 44121 Ferrara (IT)
(72) Inventor: Mariotti, Gabriele, 44121 Ferrara (IT)
(74) Representative: Bruni, Giovanni

(57) **Abstract**

The present invention relates to a hybrid-electric propulsion system for aircraft, specifically a propulsion system utilizing a propulsor driven by both an internal combustion engine and an electric machine. The hybrid-electric propulsion system includes an internal combustion engine such as a gas turbine, an electric machine (either motor or generator), and various subsystems including a thermal management subsystem for cooling flows, an electrical power supply system, a control system, and an electrochemical storage system.

## Description

### Field of the Invention

The present invention relates to a hybrid-electric propulsion system for aircraft, specifically a propulsion system utilizing a propulsor driven by both an internal combustion engine and an electric machine. The hybrid-electric propulsion system includes an internal combustion engine such as a gas turbine, an electric machine (either motor or generator), and various subsystems including a thermal management subsystem for cooling flows, an electrical power supply system, a control system, and an electrochemical storage system.

### State of the Art

Hybrid-electric propulsion systems for aircraft have undergone significant development since the early 2000s, following the advancement of electric propulsion technologies in terrestrial applications.

Hybrid-electric aircraft propulsion technology, similarly to terrestrial electric propulsion, optimizes the management of the propulsion system to reduce consumption, improve operational flexibility, and lower operating costs. It is well-known that the power required by an aircraft propulsor is not constant throughout the flight mission profile; it reaches its peak during takeoff and climb, then decreases by about 20% at cruising altitude, and reduces further during descent and landing phases. An hybrid-electric propulsion system allows the use of electric motor power during takeoff and climb phases (often referred to by the acronym TOC, "take-off and climb") in addition to the power of the internal combustion engine, which can thus be sized and optimized for the power required at cruise. The relatively short duration of the takeoff and climb phases permits the use of electrochemical batteries, such as lithium-ion batteries, as the energy source without compromising the aircraft's payload capacity.

Patent US2020/0290742 by Zunum Aero Inc. demonstrates the advantages of a hybrid-electric propulsion aircraft for regional transport over distances up to 1500 miles with more than 100 passengers. Specifically, the system described in Zunum's patent considers two gas turbines with 3.75 MW generators each, connected via an electric grid to three propulsors driven by 5.2 MW electric motors each. The 8.1 MW power difference between the turbogenerators and the electric motors is provided by a 6000 kWh electrochemical battery storage system. Among the advantages of this technology, aside from the potential for developing new aircraft architectures, are the relatively low costs associated with battery recharging and the ability to size the electric motors of the propulsors (propellers or ducted fans) for peak service. Generally, electric motors can deliver relatively high power for a limited time, corresponding to the aircraft's needs during takeoff or emergency situations. The ability to deliver much higher peak power, for example, 30% more than the continuous power, is a characteristic of electric motors that has no equivalent in gas turbine-based engines, where the power increase is associated with increased rotating speed and operating temperatures of the turbomachinery, limited in known technology by the resistance of the materials composing it.

The advantages of hybrid-electric propulsion have led major aircraft engine manufacturers to develop hybrid systems where the electric motor is mounted within a propulsion system that uses a gas turbine or, generally, an internal combustion engine. In patent US2020/0277062 by Pratt & Whitney Canada Corp., the electric motor is installed in parallel with the internal combustion engine and coupled to it via gearing within the propeller reduction gearbox. An hybrid engine implementation, related to a geared turbofan engine, is shown in Rolls Royce Pic's patent US2021/0179286.

A configuration of an hybrid system associated with a ducted fan propulsor is shown, among others, in patents US10800539 and US10676199 by General Electric Company, where the electric motor is installed within the turbomachine, particularly connected to the gas generator and the low-pressure turbine rotor that drives the fan. Patent US11156128, also by General Electric, shows an implementation of a hybrid-electric propulsor with the motor mounted inside the gas turbine. In this implementation, the electric motors are mounted on the gas generator and power turbine shafts in a position advantageous for accessibility to the electric motor during routine maintenance or repairs following a fault. The ability to operate the propulsor in fully electric or fully thermal mode allows managing emergency situations, such as faults, with reduced risks. Patent US10837304 shows an implementation where the electric motor and the thermal motor are coupled in series by a sprag type one-way clutch. This solution allows the electric motor connected to the propulsor, in the case of the cited patent, a propeller, to operate without dragging the gas turbine rotor when the latter is not operational.

In general, the known art of hybrid-electric motors for aeronautical applications involves integrating an internal combustion engine, such as a gas turbine with a design derived from known techniques, with an electric machine mounted on it, with varying degrees of mechanical integration, while still constituting a functionally and constructively separable assembly from the internal combustion engine. Although the above-described implementations introduce an improvement in the aircraft's performance, they are inherently heavier and more complex than a traditional thermal engine.

Referring to the previously described implementations and limitations, as well as others pertaining to known techniques, there is a need for systems and methods to create hybrid-electric aircraft motors with simpler architecture that can maximize thermodynamic or propulsive efficiency. It is well-known that a simple mechanical architecture, with a minimum number of components, leads to weight savings, cost reduction, and increased reliability, which translates into greater operational safety. Safety can be further increased with subsystems that can operate independently, where a fault does not propagate from one system to another.

### Summary of the Invention

The subject of the present invention is an hybrid-electric propulsion system comprising a dual-shaft gas turbine, an electric machine, and a ducted fan propulsor rotatably connected to the centrifugal radial outflow power turbine and the electric machine without an interposed gear reducer. The electric machine is preferably a radial flux synchronous type with permanent magnets. The rotor magnets are supported by the disks that also support the turbine blades, thus also forming the rotor of the electric machine. This design simplifies the architecture by maximizing the integration of the electric machine into the thermal machine components with minimal weight increase.

The electric machine is fluidically connected to a cooling system and electrically connected to a power supply system with an inverter linked to an electrochemical storage system and an electric generator mounted on the gas turbine. Advantageously, the radial outflow centrifugal turbine has lower peripheral speeds of the blades compared to a corresponding axial turbine design, for example, 100-200 m/s for the radial turbine versus 300-400 m/s for the axial turbine. This results in lower stresses on the rotating parts. It is well-known that centrifugal mechanical stresses are proportional to the peripheral speed of a rotating component. For this reason, an electric machine with a permanent magnet rotor has maximum peripheral speeds of about 250 m/s, excluding specific designs with magnets contained in composite materials that can reach 350 m/s, although the latter are not suitable due to the limitations of carbon/resin-based composite materials at the high temperatures near the turbine.

The similarity between the peripheral speeds of a radial turbine rotor and those of some permanent magnet electric machines allows the creation of rotor rings, for example, made of high-nickel alloys, which support both the turbine blades and the permanent magnets, which may be made of Samarium Cobalt. Advantageously, the permanent magnets, the rings, and the turbine rotor blades are cooled by air bled from downstream of the fan or the first compression stage to limit the maximum temperature of the magnets.

### Brief Description of the Figures

Further features and advantages of the invention will become more evident from the detailed description of preferred, but not exclusive, embodiments of an hybrid-electric propulsion system for aeronautical applications, illustrated by way of example and not limitation, with the aid of the attached drawing sheets, in which:
Fig. 1 shows a simplified section of a ducted fan propulsor with related hybrid-electric drive made according to the present invention.
Fig. 2 shows a simplified section of the electric machine and the centrifugal radial turbine driving the propulsor according to the present invention.
Fig. 3 shows a simplified functional diagram of the power supply and control system for a hybrid-electric motor made according to the present invention.
Fig. 4 shows a simplified section of a mechanism with an hydraulically actuated clutch to decouple the electric drive of the propulsor from the gas turbine according to the present invention.
Fig. 5 shows a simplified section of a mechanism with an overrunning clutch to decouple the electric drive of the propulsor from the gas turbine according to the present invention.

The same reference numbers and letters in the figures identify the same elements or components.

### Detailed Description of a Preferred Embodiment of the Invention

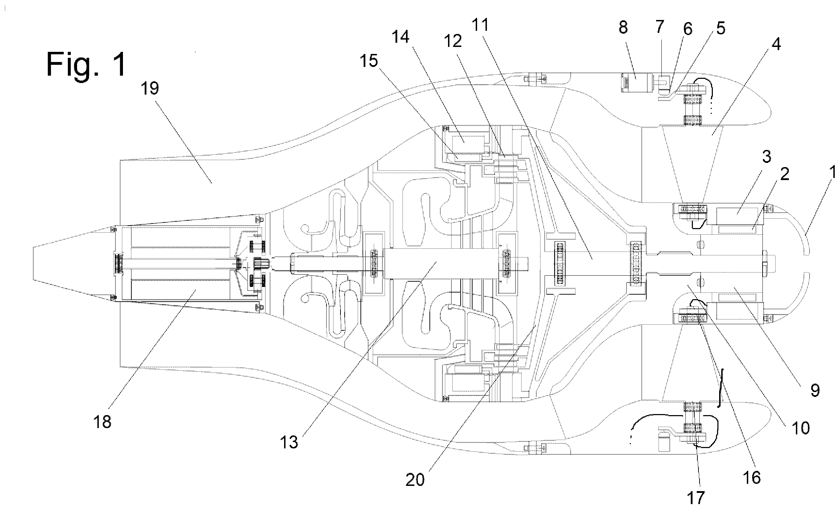

Figure 1 shows a configuration corresponding to the essential components of an hybrid-electric aeronautical propulsion system according to the present invention. The figure displays two solutions for the installation of the electric machine, respectively with the rotor integrated into the power turbine and with the rotor integrated into the fan. These two installations are considered as alternatives and are illustrated in more detail below.

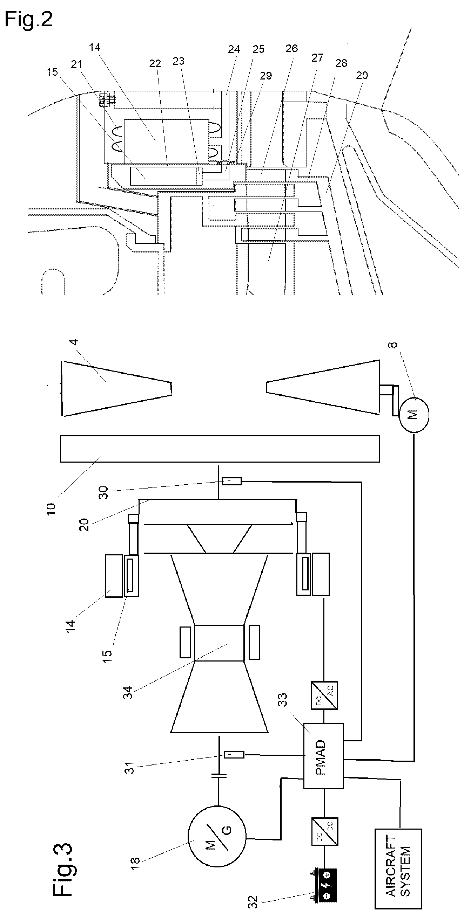

Figure 2 shows some details of the preferred solution, with an electric machine integrated into the radial centrifugal power turbine. This solution allows for the creation of an electric machine with optimal peripheral speed, for example, from 100 to 200 m/s depending on the rotor stage on which the permanent magnets are mounted, to achieve a high power density, for instance, greater than 5 kW/kg.

A propulsion unit with a diagonal-type centrifugal impeller 10 is present, comprising three-dimensional blades. The impeller is made of aluminum alloy or composite material with carbon fibers and titanium alloy. The impeller swallows the air coming from a direction opposite to the direction of the aircraft's motion and imparts radial and tangential acceleration to increase its kinetic and potential energy. A bladed duct 19 straightens the flow in the axial direction and accelerates it to the required speed for propulsive action. The impeller of the propulsion unit has a peripheral speed of about 330-400 m/s and allows achieving a compression ratio of about 1.1 - 1.2.

The blades inside the duct 19, not shown in Figure 1, are equipped with ducts fluidly connected to the exit of the radial centrifugal turbine 12 and serve as an exhaust duct up to the engine's exhaust. The impeller is mounted on the shaft 11 via a central hole equipped with a device for torque transmission, such as a splined profile and a centering diameter to prevent excessive imbalances during rotation. The hub of the impeller 10 or a rigidly connected extension 9 supports the permanent magnets of the electric machine's rotor 2, made of Neodymium.

Upstream of the propulsion impeller 10, there is a row of pre-rotation guide vanes or "IGVs" (Inlet Guide Vanes) 4 designed to direct the incoming flow to the impeller to vary the impeller's characteristic in terms of flow rate and pressure. The "IGV" blades can rotate relative to the axis defined by the roller bearings 17 by an angle that can vary between +10° and -70°, with the 0° angle corresponding to the blade position that does not introduce variations in the flow angle, i.e., the chord lies on a meridian plane relative to the rotation axis, while the negative angle corresponds to a negative pre-rotation, discharging the impeller and decreasing its capacity to do work and pressure on the incoming airflow. Negative pre-rotation reduces the flow rate processed by the impeller and its pressure, i.e., the absorbed power, as the latter is proportional to the product of flow rate and pressure.

The "IGV" blades are also axially and rotationally constrained by double-effect ball bearings 16 mounted in a frame that houses the stator of the electric machine 3 and supports a stator ogive 1 equipped with a central hole for admitting air to cool the electric machine. The "IGV" blades 4 are hollow to allow the passage of the electric machine's wires and are operated by a lever 5 connected with a spherical joint, not visible in Figure 1, to an actuation and synchronization ring 6 incorporating a rack acted upon by the pinion 7 connected to an electric actuator 8, such as a stepper motor, controlled by a control system as illustrated below. The structure supporting the blades' bearings 17 is attached to the engine frame, which in turn is connected to the aircraft using a known technique.

The shaft 11 connects the propulsion impeller 10 to a turbine disk 20 that supports a three-stage radial turbine 12. The radial outflow turbine, according to a known technique, is made up of rows of blades arranged circumferentially relative to the rotation axis and supported by rings connected with flanges to the disk 20 for the rotor rows, or to diaphragms for the stator rows. Figure 2 shows the radial centrifugal turbine with 3 stages, each comprising a row of stator blades and a row of rotor blades made according to a known technique, for example, as described in US patent 1915562 of 1929. A first row of stator blades 27 receives the gas flow with a temperature of about 700°C from the gas generator turbine, connected rotationally to the shaft 13, and expands in the centrifugal stages until reaching a temperature of about 550°C in the last rotor blade row 26. The blades have a peripheral speed of about 200 m/s, generating a centrifugal force supported by two rings connected to the ends of the individual blades with a joint or a vacuum brazing process. One ring is connected to the turbine disk 20 via flange 28, while a second ring 22 supports the centrifugal forces generated by the rotating blades and also houses the permanent magnets 15 of the electric machine, thus constrained to rotate with the radial turbine. The ring 22, which can be made using laser welding or vacuum brazing techniques, incorporates a thermal shield made of insulating material 23, such as zirconium oxide, to minimize heat transmission by conduction from the blades processing combusted gases at 550°C to the Samarium Cobalt magnets, which have a maximum operating temperature of about 300°C.

Referring to Figure 2, externally to the ring 22, there is the electric machine's stator 14 positioned at a radial distance of a few tenths of a millimeter from the rotor ring 22. The stator, formed by stamped magnetic laminations, has windings 21 connected by wires, not visible in the figures, passing through special channels inside the blades in channel 19. The electric machine's stator is cooled by air bled downstream of the fan at a pressure of about 1.1 BarA, at sea level, which is channeled into ducts 24 that distribute it in the stator and rotor into special channels 25 that distribute the cooling air to the magnets. The channels 29 are made at an angle of about 45° to the radial direction to facilitate the pumping effect due to rotation. Two labyrinth seals 29 pressurize the channels 25 with air at 1.1 BarA, minimizing leakage towards the blades 26 and the environment where the ring 22 rotates, equalized to ambient pressure through special channels. The stator 14 is powered by the generator 18 driven by the gas generator or an electrochemical storage system, or both.

Figure 3 shows the simplified power supply and control scheme of the hybrid-electric system where the gas generator 34 is mechanically connected to a generator 18 and fluidly connected to a radial centrifugal turbine whose stages are mounted on the disk 20. The generator 18 is used as a motor to start the gas generator and provide power if the system control 33, indicated as "PMAD" (Power Management & Distribution System), requires it, for example, to improve the surge margin of the gas generator compressor. The control system 33 manages the power flows between the various energy sources in the system, i.e., an electrochemical storage 32, the motor/generator 18, and the gas generator 34 to optimize propulsion in terms of both efficiency and effectiveness for the aircraft. The control system 33 controls the power supply to the electric machine integrated into the power turbine, 14 and 15, or the propulsion impeller based on speed sensors 31 and 30 and other system parameters. The control system 33 manages the position of the "IGV" 4 via the actuator 8 to optimize the operation of the propulsion system, for instance, to maximize the speed of the propulsion impeller 10 by reducing its absorbed power when the gas generator does not supply enough energy to the power turbine, and propulsion is mainly or entirely reliant on the electric motor. The "IGVs" are also controlled to optimize the thermodynamic efficiency of the power turbine at partial loads, for example, during low-speed flight, often referred to as "loitering."

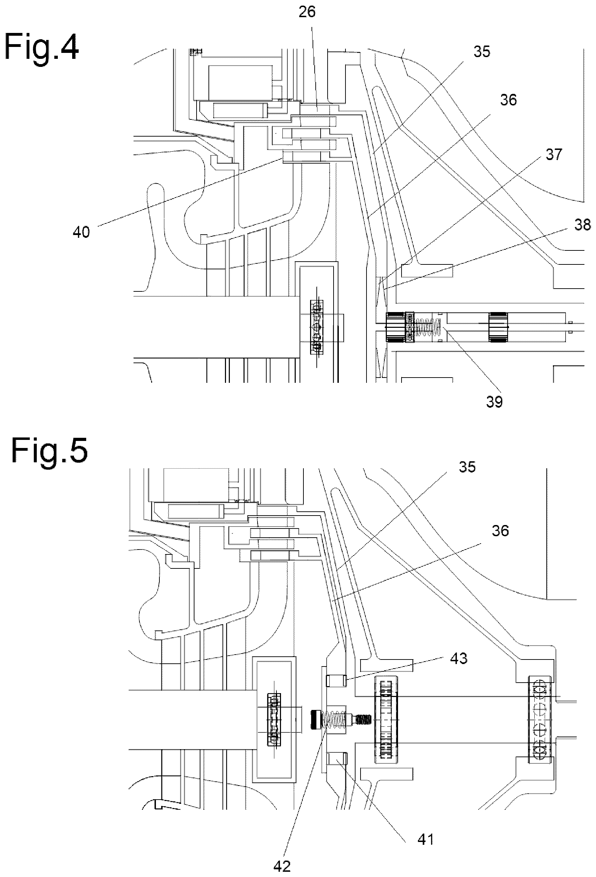

Advantageously, for fully electric propulsion, i.e., with the impeller 10 driven solely by the electric machine, it is possible to mechanically disconnect the radial turbine stages that do not incorporate the permanent magnets and would otherwise be dragged by the disk 20, producing a resistive torque due to parasitic ventilation losses of the blade rows and rotating rings. To achieve this function, an hydraulically actuated clutch shown in Figure 4 allows disconnecting the radial turbine's rotor stages transferring power to the propulsion unit 26 from those not connected to the electric machine. In this embodiment, the turbine disk 35 transmits the torque generated by the electric machine to the propulsion unit, while the disk 36 connected to the turbine stages not mechanically connected to the electric machine is connected to disk 35 via an engaging clutch constituted by frontal teeth 37 and 38 and a single-acting hydraulic actuator 39. An hydraulic system, not shown in the figure, supplies oil under pressure to the actuator 39, which, overcoming the return spring force, separates disk 36 from disk 35, disengaging teeth 37 and 38. Figure 4 shows the disengaged system, with teeth 37 and 38 unable to transmit driving torque and a radial stage braked on the support surface 40 to prevent the rotation of disk 36 and the turbine stages connected to it.

An alternative design to decouple discs 35 and 36 is shown in Figure 5 and involves using a freewheel, also known by the English name "Sprag Clutch Bearing" or one-way clutch. This device allows the discs to move together only when disc 36 is rotated in the direction of motion at the same speed as disc 35. The freewheel also incorporates the function of a radial bearing for disc 36, while specific axial bearings, 43, allow for the relative rotation of the two axially coupled discs with an elastic system 42.

The advantages of this invention are based on an engine architecture that advantageously uses components from a turbofan to integrate electrical machines with minimal modifications, which either assist or replace the gas turbine in driving the propulsion system. This approach minimizes operational costs, introduces greater flexibility in use, and provides new operational capabilities, such as the ability to operate without the thermal engine. The simple architecture is characterized by a limited number of components and is well-suited for small power engines.

## Claims

1. An Hybrid-electric propulsion system including:
- a fan propulsor including an impeller 10 with a a downstream nozzle 19 containing de-swirl blades
- a radial outflow power turbine fluidically connected to a gas generator 34 and driving the impeller 10 by means of a mechanical connection with a shaft 11 without interposed speed reducing gearbox.
- a radial outflow turbine with one or more rotor stages each having an array of blades arranged circumferentially with respect to the axis of rotation and supported at the blade roots by rings capable of containing the centrifugal forces and transmitting the generated torque.
- a radial flux permanent magnet electric machine where the rotor magnets are supported by one or more rings 22 which also support the blades 26 of the power turbine 12
- means for introducing a fluid for cooling the rotor magnets 15 into the rotating ring 22
- a power system comprising at least one electric inverter connected to an electrochemical storage system and to an electric generator mechanically coupled to the gas generator
- a control system that coordinates the energy flows to the propulsor to allow propulsion either with the gas turbine alone as the energy source, or with the electric machine mechanically connected to the propulsor or with both.

2. Hybrid-electric propulsion system according to claim 1 wherein adjustable inlet guide vanes "IGV'' are located upstream of the impeller and controlled to optimize the system and maximize the speed of the propulsion unit when this is predominantly powered by the electric machine, i.e. the power supplied by the machine electricity is greater than 50% of the power absorbed by the impeller.

3. Hybrid-electric propulsion system according to claim 1 wherein the impeller of the propulsor has blades of the axial type with variable pitch controllable in flight to optimize the system and maximize the speed of the propulsion unit when this is mainly powered by the electric machine, i.e. the power supplied by the electric machine is greater than 50% of the power absorbed by the impeller.

4. Hybrid-electric propulsion system according to claims 1 and 2 wherein the electric machine mechanically connected to the propulsion unit has the rotor integrated in the hub of the impeller of the propulsor and the stator supported by the IGVs blades.

5. Hybrid-electric propulsion system according to claim 1 wherein the rings of the radial turbine stages which support the electric machine are connected to the rings of the stages which support the power turbine blades only by means of an actuated clutch or a "one way overrun" clutch so that the rings of the turbine stages that support the electric machine can rotate without rotational constraints versus the others.
